(19) Europäisches Patentamt
European Patent Office
Office européen des brevets

(11) **EP 2 634 961 A1**

(12) # EUROPEAN PATENT APPLICATION

(43) Date of publication:
**04.09.2013 Bulletin 2013/36**

(51) Int Cl.:
*H04L 12/18* *(2006.01)*    *H04L 12/28* *(2006.01)*

(21) Application number: **12305252.4**

(22) Date of filing: **01.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Laurent, Anthony**
  **92443 Issy-les-Moulineaux (FR)**
• **Gouache, Stéphane**
  **93443 Issy-les-Moulineaux (FR)**

(74) Representative: **Ruellan-Lemonnier, Brigitte et al**
**Technicolor**
**European Patent Operations**
**1 Rue Jeanne d'Arc**
**92443 Issy-les-Moulineaux Cedex (FR)**

(54)   **MANAGEMENT OF THE TRANSMISSION OF DATA STREAMS OVER MULTIPLE NETWORKS**

(57)    Method for managing the transmission of data streams from a content server (4) to a plurality of receivers (8), the transmission of the data streams being possible over at least one broadcast network (20) made up of several transport streams and over a broadband network (24), said method comprising a step of reorganization of the data streams on the transport streams to ensure that more receivers receive the data streams over the broadcast network (20) after said reorganization.

FIG.1

EP 2 634 961 A1

**Description**

## FIELD OF THE INVENTION

The present invention generally relates to the transmission of broadcast and multicast services over a broadcast and a broadband network.

More particularly, the invention deals with the selection of the most appropriate network to deliver a content traffic. It finds application, in particular, in equipments in charge of such selection in the head-end, such as multicast proxies.

Thus, the invention concerns a method, an equipment and a system for managing the transmission of data streams. It also concerns a corresponding receiver and a computer program implementing the method of the invention.

## BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

With the growth of the use of internet, the Internet Protocol (IP) is now the principal communications protocol used for relaying data packets over multiple networks.

The most common type of IP communication is a unicast communication, in which the communication is established between nodes whose individual addresses are identified in the transmitted packets. This unicast communication is not suited for mass distribution of content to many destinations.

To meet the requirement for transmitting Internet communications to many destinations, a multicasting technique, called IP multicasting, is available. IP multicasting is a technique for one-to-many and many-to-many real-time communication over an IP infrastructure in a network. It scales to a larger receiver population by not requiring prior knowledge of who or how many receivers there are. Multicast uses network infrastructure efficiently by requiring a source to send a packet of data only once, even if it needs to be delivered to a large number of receivers. Certain nodes in the network, typically network switches and routers, take care of replicating the packet to reach multiple receivers such that messages are sent over each link of the network only once.

IP multicasting is associated with an addressing scheme based on the group address, wherein the IP address identifies a multicast group which is for example a TV channel/stream in the case of IP TV (Internet Protocol TeleVision).

IP multicasting is also associated with an IP signaling companion protocol called IGMP (Internet Group Management Protocol) which is used by a terminal and/or an application to signal its connection and/or disconnection to a group, for example a TV channel. The IGMP protocol allows an IP network which comprises one or more routers to optimize the distribution of IP multicast traffic by forwarding the IP multicast packet only over branches where at least one group member has been signaled.

Another technique enabling the transmission of content to many destinations is broadcasting, in particular digital television over cable (e.g. DVB-C) or satellite (e.g. DVB-S) or terrestrial (e.g. DVB-T) links. Broadcasting differs from IP transmission in that the communication is essentially unidirectional.

Recently, broadcast networks have evolved in a way that they can transport IP streams including IP multicast streams.

It is known, for example from the document EP1298836, a way to select, in the head-end, the most appropriate network to deliver an IP multicast service between a broadcast unidirectional link, such as DVB-T, DVB-C or DVB-H, or a broadband link. The equipment in charge of this selection is called a multicast proxy.

However, the existing solutions are still insufficient to ensure that the maximum number of users receive IP multicast streams over a broadcast link in order to save at the most the broadband bandwidth.

Furthermore, in order to be transmitted through a broadcast network, data streams are packetized in transport streams each of them being delivered at a different frequency. At the receiver side, a broadcast adapter can tune to only one frequency, i.e. it can receive a single transport stream, at the same time. Consequently, if two IP multicast streams are available on the same broadcast network but on two separate transport streams, a receiver will have to select the most appropriate transport stream to be received by the broadcast adapter. Thus, the IP multicast stream delivered by the other transport stream must be received by the broadband adapter. This organization of the IP multicast streams is not optimal since it would be preferable to receive both multicast streams by the broadcast adapter.

## SUMMARY OF THE INVENTION

The present invention proposes a solution for improving the situation.

Accordingly, the present invention provides a method for managing the transmission of data streams from a content server to a plurality of receivers, the transmission of the data streams being possible over at least one broadcast network made up of several transport streams and over a broadband network, said method comprising a step of reorganization of the data streams on the transport streams to ensure that more receivers receive the data streams over the broadcast network after said reorganization.

With the method according to the present invention, it is possible to dynamically allocate the data streams over the available transport streams of the broadcast network and thus to save the broadband bandwidth at most.

Advantageously, the step of reorganization comprises a reallocation of at least one data stream to a transport stream in function of the number of receivers interested in receiving said data stream and/or on the data stream's bandwidth.

The reallocated data stream may have been transmitted over the broadband network or over an other transport stream prior to said reorganization.

According to a first embodiment, when a first data stream is delivered only over the broadband network, the step of reorganization comprises steps of :

- identification of a second data stream delivered over the broadcast network on a second transport stream ;

- allocation of the second data stream to the broadband network;

- computation, for each transport stream of the broadcast network, of the number of receivers requesting the first data stream and already receiving at least one other data stream over said transport stream ; and

- selection of a third transport stream as the transport stream associated with the highest number of receivers ;

- comparison between the third transport stream and the second transport stream;

- if the third transport stream is equal to the second transport stream, allocation of the first data stream to the second transport stream instead of the second data stream;

- if the third transport stream is different from the second transport stream :

- selection of a third data stream delivered on said third transport stream, having the less receivers requesting it;

- verification of a first condition, relative to the third data stream, ensuring that more receivers receive data streams over the broadcast network after said reorganization ; and

- if the first condition is satisfied, allocation of the third data stream to the second transport stream instead of the second data stream and allocation of the first data stream to the third transport stream instead of the third data stream.

This embodiment enables to allocate a first data stream received over the broadband network to a selected transport stream of the broadcast network. This means that the first data stream will be delivered on the selected transport stream. This allocation may be decided by an equipment in charge of the reorganization, as a multicast proxy. It mainly happens after a request from a receiver to receive said multicast stream or to stop receiving another multicast stream that will be replaced by said multicast stream. With this embodiment, it is possible to choose the most appropriate transport stream for delivering the data stream while satisfying the highest number of receivers. Two solutions are possible. Either, the second data stream is simply replaced by the first data stream on the second transport stream or the reorganization is carried through intermediate allocations. The choice between both solutions depends on the number of receivers favored by each of them.

According to a second embodiment, when a first data stream, that is requested by a receiver, is delivered over the broadcast network on a first transport stream, the step of reorganization comprises steps of:

- identification of a second transport stream already received by the receiver making the request ;

- identification of a second data stream, delivered on the second transport stream, having enough bandwidth to deliver the first data stream;

- verification of a second condition, relative to the second data stream, ensuring that more receivers receive data streams over the broadcast network after said reorganization ; and

- if the second condition is satisfied, allocation of the second data stream to the first transport stream and allocation of the first data stream to the second transport stream instead of the second data stream.

This enables the receiver to receive the requested data stream on a transport stream it already receives.

According to a third embodiment, when a first data stream, that is requested by a receiver, is delivered over the broadcast network on a first transport stream, the step of reorganization comprises steps of:

- identification of a second transport stream already received by the receiver making the request ;

- identification of a set of data streams, different from the first data stream, delivered over the first transport stream, said set having enough bandwidth to deliver data streams already received on the second transport stream;

- verification of a third condition, relative to the identified set, ensuring that more receivers receive data streams over the broadcast network after said reorganization ; and

- if the third condition is satisfied, allocation of the set to the second transport stream and allocation of the already received data streams to the first transport stream instead of said set.

This enables the receiver to receive all the data streams, i.e. the already received and the requested data streams, on the same transport stream, which is the first transport stream, when there is not enough available bandwidth on the second transport stream already received.

According to a fourth embodiment, when a first data stream, that is requested by a receiver, is delivered over the broadcast network on a first transport stream, the step of reorganization comprises steps of:

- identification of a second transport stream already received by the receiver making the request ;

- identification of a third transport stream different from the first transport stream and from the second transport stream ;

- identification of a set of data streams delivered over the third transport stream, said set having enough bandwidth to deliver together data streams already received on the second transport stream and the first data stream ;

- verification of a fourth condition, relative to the identified set, ensuring that more receivers receive data streams over the broadcast network after said reorganization ; and

- if the fourth condition is satisfied, allocation of the set to the first and to the second transport streams and allocation of the already received data streams and of the first data stream to the third transport stream instead of said set.

This enables the receiver to receive all the data streams, i.e. the already received and the requested data streams, on the same transport stream when there is no enough bandwidth neither on the transport stream already received nor on the first transport stream delivering the requested data stream.

The second, third and fourth embodiments remarkably allow the receiver to receive the requested data stream while continuing to receive the already received data streams over the broadcast network.

Advantageously, the method further comprises a step, carried when a receiver is impacted by the reorganization of the data streams of transmission to the receiver of a message indicating that a data stream being received by said receiver will be moved from a first to a second transport stream over a first network.

Thus, the receiver is informed of the change and it may request to also receive said data stream over a second network, for example the broadband network in order to ensure that the reception of the data streams is not interrupted or at least that the interruption is the shortest as possible during the reorganization. Thus, the receiver suffers from no stream discontinuity or the shortest stream discontinuity when switching from a transport stream to another.

Advantageously, the data streams comprise broadcast and/or multicast streams.

As already known, when delivered over the broadband network, a broadcast stream becomes what is called an "IPTV service", i.e. a multicast stream.

In a preferred embodiment, the multicast streams are IP multicast streams.

The invention also provides an equipment for managing the transmission of data streams from a content server to a plurality of receivers, the transmission of each data stream to each receiver being possible over at least one broadcast network made up of several transport streams and over a broadband network, said equipment comprising a reorganizer for reorganizing the data streams on the transport streams to ensure that more receivers receive data streams over the broadcast network after said reorganization.

This equipment is, for example, a multicast proxy.

Advantageously, the reorganizer comprises a reallocation module for reallocating at least one data stream to a transport stream in function of the number of receivers interested in receiving said data stream and/or on the data stream's bandwidth.

The invention further provides a receiver able to receive data streams from a content server over at least a broadcast network and a broadband network, said receiver further comprising:

- a first module for receiving from an equipment a message indicating that a data stream being received by said receiver will be moved from a first to a second transport stream over a first network; and

- a second module for transmitting a request to receive said data stream over a second network.

This receiver is, for example, a gateway.

When the second network is a broadcast network, the request is advantageously transmitted to the equipment of the invention. When the second network is a broadband network, the request is advantageously transmitted over the broadband network, in a conventional way through the use of the IGMP protocol.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

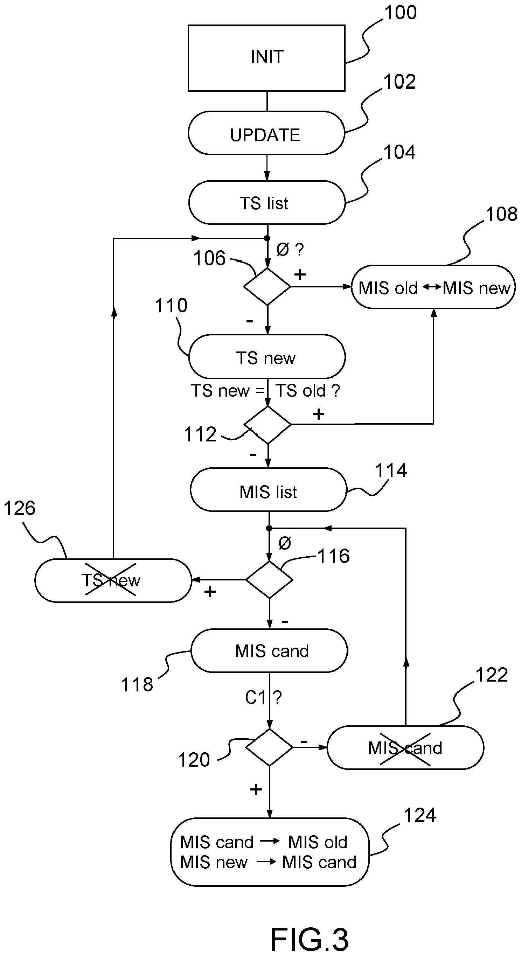

The invention thus provides a computer-readable program comprising computer-executable instructions to enable a computer to perform the method of the invention. The diagrams of figures 3 to 6 illustrate examples of the general algorithm for such computer program.

**BRIEF DESCRIPTION OF THE DRAWINGS**

The present invention is illustrated by way of examples, and not by way of limitation, in the figures of the accompanying drawings, in which like reference numerals refer to similar elements and in which:

- Figure 1 is a schematic view of an embodiment of a transmission system implementing the method of the invention ;

- Figure 2 shows an example of a broadcast network composition ;

- Figure 3 is a flowchart showing the steps of the method of the present invention, according to a first embodiment;

- Figure 4 is a flowchart showing the steps of the method of the present invention, according to a second embodiment;

- Figure 5 is a flowchart showing the steps of the method of the present invention, according to a third embodiment;

- Figure 6 is a flowchart showing the steps of the method of the present invention, according to a fourth embodiment;

- Figure 7 is a schematic view of an embodiment of the switch between two transport streams at the receiver's level;

- Figure 8 is a schematic view of an equipment according to the invention; and

- Figure 9 is a schematic view of a receiver according to the invention.

**DETAILED SCRIPTION OF PREFERRED EMBODIMENTS**

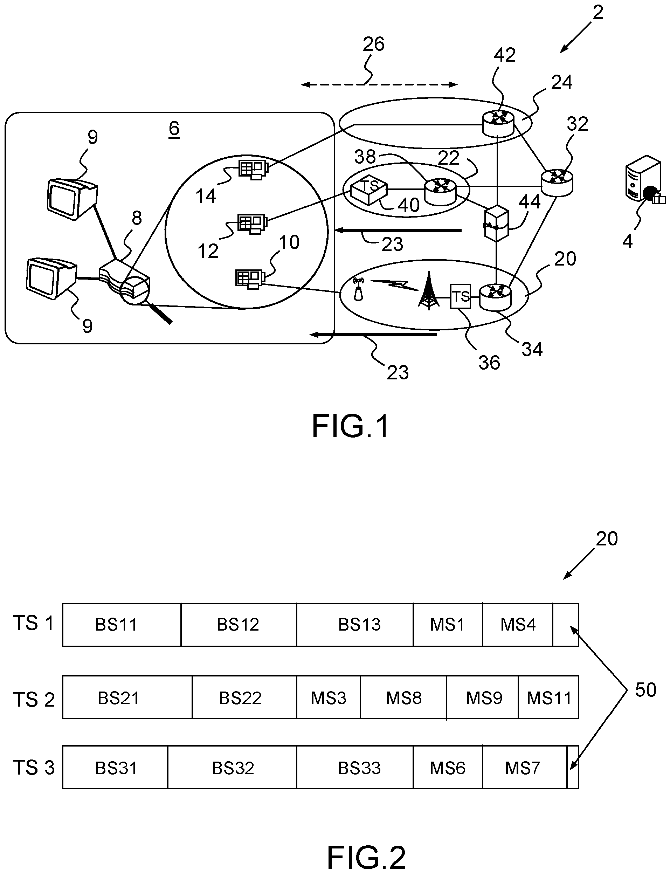

Referring to Figure 1, there is shown therein a schematic view of a transmission system 2 combining multiple communication links for transmitting data streams from a content server 4 to a home network 6.

The home network 6 comprises a gateway 8 with several connected clients 9. The clients 9 are typically terminals such as TV sets, set-top boxes or handheld devices, for example.

The gateway 8 comprises broadcast adapters 10, 12 and a broadband adapter 14.

For instance, the broadcast adapter 10 is a DVB-T broadcast adapter able to receive broadcast transport streams of a DVB-T network 20 whereas the broadcast adapter 12 is a DVB-C broadcast adapter able to receive transport streams of a DVB-C network 22. The broadcast networks 20, 22 permit only unidirectional downlink communications, as shown by the arrows 23.

The broadband adapter 14 is able to receive data transmitted over a broadband network 24. It may be an ADSL receiver, for example. The broadband network 24 permits a bidirectional communication with the gateway 8, as shown by the arrow 26.

The networks 20, 22, 24 may belong to one or more operators.

Thus, in the system 2, the data transmitted from the content server 4 are received by the gateway 8 of the home network 6 through one of the broadcast networks 20, 22 by the associated broadcast adapter 10,12 and through the broadband network 24 by the broadband adapter 14. A router 32 is able to dispatch the data to each of these networks.

The DVB-T network 20 comprises a DVB-T router 34 and a DVB-T transport stream manager 36.

In the same manner, the DVB-C network 22 comprises a DVB-C router 38 and a DVB-C transport stream manager 40.

The broadband network comprises an edge router 42.

A multicast proxy 44 is also provided in the transmission system 2. It is linked to the routers 34, 38, 42 of the networks 20, 22, 24, respectively.

The transmission system 2 functions in the following manner.

Data streams, comprising IP multicast streams and broadcast streams, available at the content server 4 are transmitted to the router 32 that can route them to the networks 20, 22, 24.

When a client 9 wishes to receive a particular broadcast or multicast service, the multicast proxy 44 selects the network 20, 22 or 24 over which this service will be provided to the client 9. According to the present invention, the multicast proxy 44 carries this selection in a manner ensuring that the majority of receivers receives the data streams over the broadcast networks 20, 22 in order to save the bandwidth of the broadband network 24.

After having made the selection, the multicast proxy 44 indicates to the gateway 8 over which network the requested content is delivered.

When the selected network is a broadcast network 20, 22, the associated transport stream manager 36, 40 is informed of the transport streams composition decided by the multicast proxy 44 and it transmits the requested data streams accordingly.

As well-known in the art, each broadcast network 20, 22 is made up of several transport streams, each of them being delivered at a different frequency. A transport stream delivers several services. It encapsulates packetized data streams. Each piece of data, as for example IP multicast streams or broadcast streams in a transport stream is identified by a 13-bit packet identifier, named PID.

In a purpose of simplification, only the broadcast DVB-T network 20 is considered in the following description.

Figure 2 shows an example of an initial composition of the broadcast network 20. It is made up with 3 transports streams TS1, TS2, TS3, each of them delivering broadcast and IP multicast streams.

In the shown example :

- the transport stream TS1 delivers broadcast streams BS11, BS12 and BS13 as well as IP multicast streams MS1 and MS4 ;

- the transport stream TS2 delivers broadcast streams BS21 and BS22 as well as IP multicast streams MS3, MS8, MS9 and MS11 ; and

- the transport stream TS3 delivers broadcast streams BS31, BS32 and BS33 as well as IP multicast streams MS6 and MS7.

The reference 50 in figure 2 refers to available bandwidth in the transport streams TS1 and TS3.

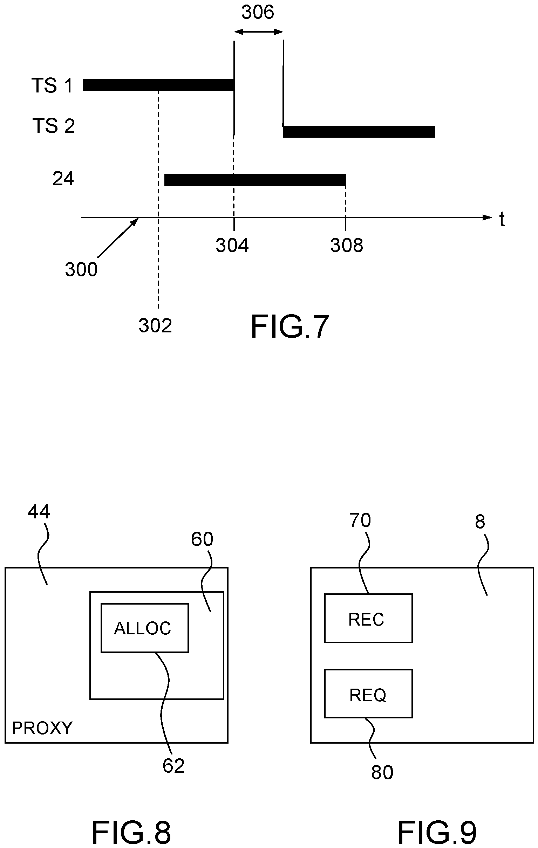

At the receiver side, the broadcast adapter 10 can tune to only one frequency, i.e. it can receive a single transport stream, at the same time. Thus, if the client 9 wants to receive two IP multicast streams delivered over 2 separate transport streams, for example MS1 and MS3 delivered over transport streams TS1 and TS2, then the gateway 8 will receive one multicast stream, for example MS1, through the broadcast network 20, and the other multicast stream, for example MS3, over the broadband network. Consequently, there's a consumption of the broadband bandwidth. In the present invention, the multicast proxy 44 will try to reorganize, by means of a reorganizer 60 represented in figure 8, the allocation of at least the multicast streams on the transport streams so that the maximum of receivers receives the requested streams through the broadcast network, in order to save the broadband bandwidth. Thus, it would be possible, with the present invention, to allow the gateway 8 to receive both multicast streams MS1 and MS3 on the same transport stream.

The following description is focused on the reorganization of the IP multicast streams in the transport streams of the broadcast network 20. However, the same processes may be applied to the reorganization of the broadcast streams.

The described embodiments of the invention use information provided from the gateways to the multicast proxy 44 about the IP multicast streams that they request and/or receive.

The multicast proxy 44 maintains a first table with, for each IP multicast stream, represented for example by its IP address, the list of gateways requesting this stream, the gateways being represented by their IP addresses. This table also contains additional information about each multicast stream as the delivery network, for example broadcast or broadband, the transport stream (in the case of a broadcast network), the PID (in the case of a broadcast network), the bandwidth, etc. This table is called the "IP multicast streams table" in the following. Thanks to this table, the multicast proxy 44 decides dynamically with appropriate criteria, such as the number of gateways requesting a stream, the requested stream bandwidth etc., if a multicast stream must be delivered over the broadcast network 20 or the broadband network 24, and, when a change is made in the allocation of the streams, the multicast proxy 44 announces the change to at least each gateway concerned by the change.

Table 1 is an example of an IP multicast streams table based on the broadcast network composition given in figure 2.

Table 1

| IP multicast streams index | Gateways | Network | TS | PID | Bandwidth |
|---|---|---|---|---|---|
| 1 | G1, G3, G4 | Broadcast | 1 | PID1 | BW1 |
| | G6 | Broadband | | | |
| 2 | G4, G5 | Broadband | | | BW2 |
| 3 | G2, G7 | Broadcast | 2 | PID3 | BW3 |
| 4 | G1, G3 | Broadcast | 1 | PID4 | BW4 |
| 5 | G3 | Broadband | | | BW5 |
| 6 | G6 | Broadcast | 3 | PID6 | BW6 |
| 7 | G6 | Broadcast | 3 | PID7 | BW7 |
| | G1 | Broadband | | | |
| 8 | G2, G8 | Broadcast | 2 | PID8 | BW8 |
| | G6 | Broadband | | | |
| 9 | G9 | Broadcast | 2 | PID9 | BW9 |
| 10 | G5 | Broadband | | | BW10 |
| 11 | G2, G7, G9 | Broadcast | 2 | PID11 | BW11 |

In a preferred embodiment, the multicast proxy 44 maintains also a second table, called the "gateways table". This table is obtained from the IP multicast streams table and it aims at providing, in a direct manner, the IP multicast streams requested and/or received by each gateway.

Table 2 is an example of a gateways table deduced from Table 1.

Table 2

| Gateway | IP multicast stream index | Broadcast TS |
|---|---|---|
| G1 | 1, 4, 7 | 1 |
| G2 | 3, 8, 11 | 2 |
| G3 | 1, 4, 5 | 1 |
| G4 | 1,2 | 1 |
| G5 | 2, 10 | |
| G6 | 1, 6, 7, 8 | 3 |
| G7 | 3, 11 | 2 |
| G8 | 8 | 2 |

(continued)

| Gateway | IP multicast stream index | Broadcast TS |
|---------|---------------------------|--------------|
| G9 | 9, 11 | 2 |

This preferred embodiment, consisting in maintaining both tables, consumes memory for the storage. However, it has the advantage of providing directly the IP multicast streams for a given gateway.

In an alternative embodiment, only the IP multicast streams table is stored and the multicast proxy 44 has to parse systematically the whole table to obtain the IP multicast streams for a given gateway. This parsing consumes computational resources.

We suppose in the following that the multicast proxy 44 maintains both tables.

The main criterion for reorganizing the various transport streams by changing the allocation of IP multicast streams is to ensure that more gateways will receive IP multicast streams over the broadcast network 20 after than before the reorganization.

Figure 3 is a flowchart showing the steps of such reorganization when the multicast proxy 44 decides to deliver an IP multicast stream, initially delivered over the broadband network 24, over the broadcast network 20.

When the multicast proxy 44 decides to deliver an IP multicast stream MISnew over the broadcast network 20, this stream will replace another IP multicast stream MISold, initially delivered on a transport stream TSold, that will be delivered over the broadband network 24. This implies that there is enough free bandwidth to achieve this operation.

For instance, this decision is made by the multicast proxy 44 when this latter notices that MISold is the least requested IP multicast stream delivered over the broadcast network 20 whereas MISnew has more gateways requesting it than MISold.

The principle of the algorithm represented in figure 3 is to check whether the majority of the gateways will be favored simply by replacing MISold by MISnew on TSold or if this optimization is obtained thanks to several intermediate re-allocations.

At an initial step 100, the multicast proxy 44 decides to deliver MISnew over the broadcast network 20 and to deliver MISold over the broadband network 24. For this, the multicast proxy 44 updates, at step 102, its two tables by removing all references to the replaced stream MISold that will be delivered over the broadband network.

Then, at step 104, the multicast proxy 44 looks for all the receivers, i.e. the gateways, that are interested in MISnew and that are receiving at least one other IP multicast stream through the broadcast network 20. Considering only the gateways satisfying this condition, the multicast proxy 44 counts, for each transport stream of the broadcast network 20, the number of gateways receiving an IP multicast stream delivered over said transport stream. Then, the transport streams are sorted in a list, called "TS list", from the one with the highest number of gateways to the one with the lowest number of gateways.

At step 106, the multicast proxy 44 checks if the "TS list" is empty.

If the "TS list" is empty, then MISnew will simply take the place of MISold at step 108.

To achieve this in a seamless way for the gateways impacted by this decision, the multicast proxy 44 informs these gateways about the changes before both MISnew and MISold are moved. For example, the multicast proxy 44 sends a first message to the gateways that will receive the MISnew over the broadcast network 20 and a second message to the gateways to request the delivery, for example via an IGMP join request, of MISold over the broadband network 24.

Then, the multicast proxy 44 updates its two tables by adding references to the new multicast stream MISnew before returning to the initial state 100.

Preferably, the multicast proxy 44 waits for a moment to re-allocate the multicast streams after having informed the gateways about the changes in order to allow the gateways to get ready to start receiving the multicast streams on their respective new allocated networks.

If the "TS list" is not empty, the multicast proxy 44 gets, at step 110, from said list, the transport streams having the highest number of gateways, called TSnew.

At step 112, the multicast proxy 44 compares TSnew with TSold.

If TSnew is the transport stream on which was delivered MISold, i.e. TSold, then the multicast proxy 44 goes to step 108.

As an example, the multicast proxy 44 decides to replace the IP multicast stream MS4, that concerns gateways G1 and G3, by the IP multicast stream MS2, that concerns gateways G4 and G5. The gateway G4 is also receiving the IP multicast stream MS1 delivered over the transport stream TS1 and the gateway G5 is also receiving the IP multicast stream MS I delivered over the broadband network 24. So, the number of gateways interested in the IP multicast stream MS2 and that are receiving at least one other IP multicast stream, for each TS, is represented in following Table 3.

Table 3

| TS | number of gateways |
|----|--------------------|
| 1  | 1                  |
| 2  | 0                  |
| 3  | 0                  |

Thus, the transport stream with the highest number of clients is TS1 and the IP multicast stream MS4 is delivered over TS 1. So, the IP multicast stream MS2 will replace the IP multicast stream MS4 on the transport stream TS 1.

Else, if TSnew is different from TSold, then the multicast proxy 44 checks if there is an IP multicast stream present on TSnew that could be moved to TSold to free bandwidth for MISnew on TSnew.

For this, the multicast proxy 44 puts, at step 114, all the multicast streams of TSnew in a list, called "MIS candidate list", sorted from the IP multicast stream having the lowest number of gateways interested in it to the one having the highest number.

The multicast proxy 44 checks, at step 116, if the "MIS candidate list" is empty or not.

If the "MIS candidate list" is not empty, the multicast proxy 44 gets, at step 118 from this list the IP multicast stream, called MIScandidate, having the lowest number of gateways interested in it.

The condition to achieve a re-allocation of a multicast stream is to ensure that more clients will receive multicast streams over the broadcast network after this reallocation than before.

This condition is expressed with the following formula, noted C1:

$$(NnewTSnew * BWnew + NcanTSold * BWcan) > (NnewTSold * BWnew + NcanTSnew * BWcan)$$

in which:

- NnewTSnew is the number of gateways interested in MISnew that are receiving at least one other multicast stream through TSnew ;
- NcanTSold is the number of gateways interested in MIScandidate that are receiving at least one other multicast stream through TSold ;
- NnewTSold is the number of gateways interested in MISnew that are receiving at least one other multicast stream through TSold ;
- NcanTSnew is the number of clients interested in MIScandidate that are receiving at least one other multicast stream through TSnew ;
- BWnew is the bandwidth occupied by MISnew ;
- BWcan is the bandwidth occupied by MIScandidate.

At step 120, the multicast proxy 44 checks whether, with the candidate multicast stream MIScandidate, the above formula C1 is respected or not.

If the formula C1 is not respected, then the multicast proxy 44 removes, at step 122, this candidate MIScandidate from the « MIS candidate list » and returns to step 116.

If the formula C1 is respected, the multicast proxy 44 decides, at step 124, to replace MISold by MIScandidate on TSold and MIScandidate by MISnew on TSnew. To achieve the changes in a seamless way for the gateways impacted by this decision, the multicast proxy 44 informs these gateways about the changes before the multicast streams are moved. Then, the multicast proxy 44 allocates, by means of a reallocation module 62, represented in figure 8, MISnew on TSnew and MIScandidate on TSold, updates its two tables with references to MISnew and MIScandidate. Then, the multicast proxy 44 returns in the initial state 100.

Preferably, the multicast proxy 44 waits for a moment to re-allocate the streams after having informed the gateways about the changes in order to allow the gateways to get ready to start receiving the multicast streams on their new transport streams.

If the "MIS candidate list" is empty, then the multicast proxy 44 removes, at step 126, the transport stream TSnew from the TS list and returns to step 106.

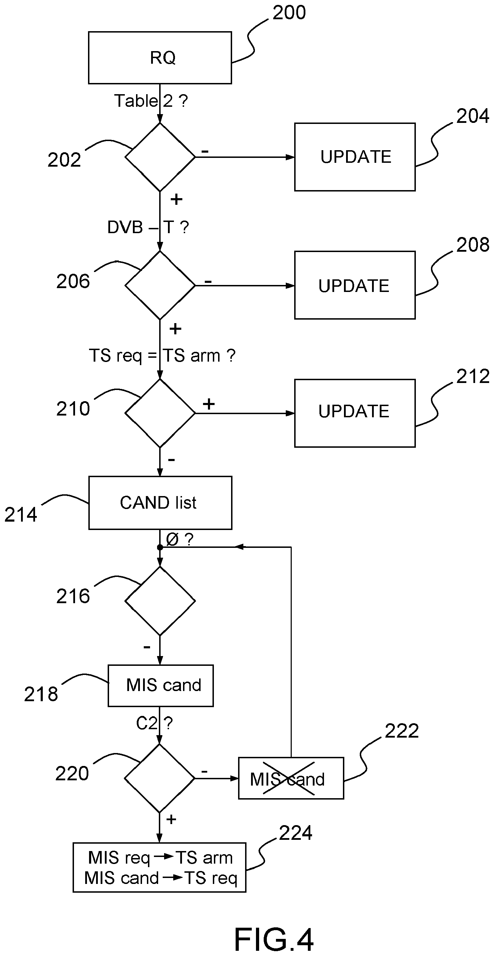

Figure 4 is a flowchart showing the steps of the reorganization of the transport streams, according to a second embodiment, when a request is emitted by the gateway 8 to receive an IP multicast stream available over the broadcast network 20.

At step 200, the multicast proxy 44 receives a request from the gateway 8 that this latter wants to receive an IP multicast stream MISreq available over the broadcast network 20 on a transport stream TSreq.

The multicast proxy 44 checks, at step 202, if the gateway 8 is already present in the gateways table.

If not, then the multicast proxy informs, at step 204, the gateway 8, for example by sending a message, and updates its two tables by adding references to the new gateway 8 and to the requested multicast stream MISreq. This situation means that the gateway's broadcast adapter 10 is not used to receive another IP multicast stream that could be delivered within another transport stream. Then, the multicast proxy returns in the initial state 200. An example of this situation is the gateway G10 requesting the IP multicast stream MS 1.

If the gateway 8 is already referenced in the gateways table, i.e. it is receiving at least one IP multicast stream delivered over broadcast, the multicast proxy checks several points. The multicast proxy 44 checks, at step 206, if the broadcast network of the requested IP multicast stream is the same as the broadcast network 20 of the already being received multicast streams.

If not, the requested multicast stream is the only one received on this broadcast network. Consequently, the broadcast adapter 10 is not used to receive another IP multicast stream that could be delivered within another transport stream. At step 208, the multicast proxy 44 informs the gateway 8, for example by sending a message, and updates its two tables by adding references to this gateway. Then, the multicast proxy 44 returns in the initial state 200. An example of this situation is the gateway G5 requesting the IP multicast stream MS1.

If one or more IP multicast streams have already been received on this broadcast network 20 by the gateway 8, then the multicast proxy 44 checks, at step 210, if the requested IP multicast stream and the already received IP multicast stream(s) are delivered within the same transport stream.

In the following, the list of the already received IP multicast streams by the gateway 8 is called "list of already received MIS" and the transport stream on which are broadcast these already received multicast streams is called TSarm.

If the already received and the requested multicast streams are delivered within the same transport stream, i.e. TSreq = TSarm, then the gateway 8 can also receive the requested IP multicast stream in addition to the already received multicast streams. At step 212, the multicast proxy 44 informs the gateway 8, for example by sending a message, and updates its two tables by adding references to the gateway 8 and to the requested multicast stream MISreq. Then, the multicast proxy 44 returns to the initial state 200. An example of this situation is the gateway G2 requesting the IP multicast stream MS9.

If they are delivered over separate transport streams, the multicast proxy 44 checks if it can move the requested multicast stream MISreq from the transport stream TSreq to the transport stream TSarm. For this, the multicast proxy 44 looks for an IP multicast stream, different from the multicast streams already received, to be moved from TSarm to TSreq.

At step 214, the multicast proxy 44 generates a list, called "list of candidate MIS" with all IP multicast streams present on TSarm, except the ones already received, that could free enough bandwidth to deliver MISreq.

The multicast proxy 44 checks, at step 216, if this list of candidate MIS is empty or not.

In this second embodiment, the list of candidate MIS is not empty. Then, the multicast proxy gets, at step 218, one IP multicast stream, called MIScandidate, from the list of candidate MIS. The condition to achieve a reorganization of the IP multicast streams is to ensure that more gateways will receive IP multicast streams over the broadcast network 20 after this reorganization.

This condition is expressed with the following formula, noted C2:

$$(NreqTSarm * BWreq + NcanTSreq * BWcan) > (NreqTSreq * BWreq + NcanTSarm * BWcan)$$

in which:

- NreqTSarm is the number of gateways interested in MISreq that are receiving at least one other IP multicast stream through TSarm ;
- NcanTSreq is the number of clients interested in MIScandidate that are receiving at least one other IP multicast stream through TSreq ;
- NreqTSreq is the number of clients interested in MISreq that are receiving at least one other IP multicast stream through TSreq ;
- NcanTSarm is the number of clients interested in MIScandidate that are receiving at least one other IP multicast stream through TSarm ;
- BWreq is the bandwidth occupied by MISreq ; and
- BWcan is the bandwidth occupied by MIScandidate.

At step 220, the multicast proxy 44 checks whether the formula C2 is respected or not.

If the formula C2 is not respected, then the multicast proxy 44 removes this candidate from the list of candidate MIS and returns to step 216.

If the formula C2 is respected, the multicast proxy 44 decides, at step 224, to allocate MISreq on TSarm and MIScandidate on TSreq. To achieve the changes in a seamless way for the gateways impacted by this decision, the multicast proxy 44 informs these gateways about the changes. Then, the multicast proxy 44 allocates MISreq on TSarm and MIScandidate on TSreq, updates its two tables with references to MISreq and MIScandidate. Then, the multicast proxy 44 returns to the initial state 200.

Preferably, the multicast proxy 44 waits for a moment to re-allocate the streams after having informed the gateways about the changes in order to allow the gateways to get ready to start receiving the multicast streams on their new transport streams.

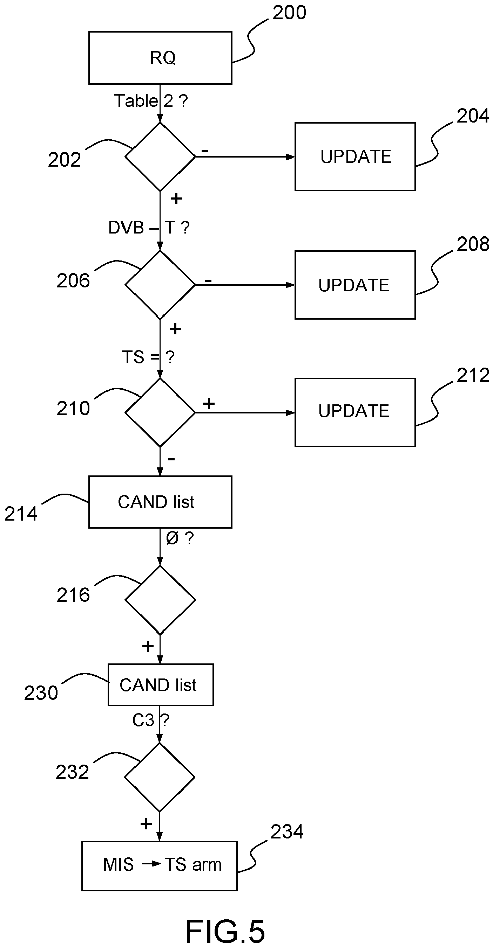

Figure 5 is a flowchart showing the steps of the reorganization of the transport streams, according to a third embodiment, when a request is emitted by the gateway 8 to receive an IP multicast stream available over the broadcast network 20 and there are no IP multicast streams present on the transport stream already received by the gateway, and different from the multicast streams already received, that could free enough bandwidth to deliver the requested IP multicast stream.

Steps 200 to 216 are identical to those of the second embodiment (figure 4). Their description is not repeated.

In this third embodiment, the list of candidate MIS is empty and the multicast proxy 44 checks if it can move the list of already received IP multicast streams from the already received transport stream TSarm to the requested transport stream TSreq. For this, it looks for a list of IP multicast streams, different from MISreq, that could free enough bandwidth to deliver the list of already received IP multicast streams to be moved from TSreq to TSarm.

At step 230, the multicast proxy 44 generates a list, called "list of candidate MIS TSreq" with all IP multicast streams present on TSreq, except MISreq, that could free enough bandwidth to deliver the list of already received MIS.

The multicast proxy 44 checks, at step 232, if there is a combination of candidate IP multicast streams, i.e. one or more multicast streams in this list, that could free enough bandwidth and that satisfies the following equation, called C3:

$$\left(\left(\sum_{k=0}^{N} NarmTSreq_k * BWarm_k\right) + \left(\sum_{k=0}^{M} NcanTSarm_k * BWcan_k\right)\right)$$

$$>$$

$$\left(\left(\sum_{k=0}^{N} NarmTSarm_k * BWarm_k\right) + \left(\sum_{k=0}^{M} NcanTSreq_k * BWcan_k\right)\right)$$

in which:

- N is the number of already received IP multicast streams on TSarm
- M is the number of IP multicast streams present on TSreq, except MISreq, that could free enough bandwidth to deliver the list of already received IP multicast streams;
- $NarmTSreq_k$ is the number of gateways interested in the $k^{th}$ element of the list of already received IP multicast streams that are receiving at least one other IP multicast stream through TSreq ;
- $NcanTSarm_k$ is the number of gateways interested in the $k^{th}$ element of the combination of candidate IP multicast streams that are receiving at least one other IP multicast stream through TSarm ;
- $NarmTSarm_k$ is the number of gateways interested in the $k^{th}$ element of the list of already received IP multicast streams that are receiving at least one other IP multicast stream through TSarm ;
- $NcanTSreq_k$ is the number of gateways interested in the $k^{th}$ element of the combination of candidate IP multicast streams that are receiving at least one other IP multicast stream through TSreq ;
- $BWarm_k$ is the bandwidth of the $k^{th}$ element of the list of already received IP multicast streams ; and
- $BWcan_k$ is the bandwidth of the $k^{th}$ element of the combination of candidate IP multicast streams.

This equation is tested for every combination of IP multicast streams that could free enough bandwidth. The multicast proxy 44 checks if at least one combination satisfies the equation C3.

In this third embodiment, it is the case. So, the multicast proxy 44 decides, at step 234, to move on TSarm the combination that provides the highest value to:

$$((\textstyle\sum_{k=0}^{N} \quad NarmTSreq_k * BWarm_k) + (\sum_{k=0}^{M} \quad NcanTSarm_k * BWcan_k))$$

$$-$$

$$((\textstyle\sum_{k=0}^{N} \quad NarmTSarm_k * BWarm_k) + (\sum_{k=0}^{M} \quad NcanTSreq_k * BWcan_k))$$

Then, the multicast proxy 44 prevents all the gateways impacted by this decision, allocates all the already received IP multicast streams on *TSreq* and all *MIScandidate* of the combination to *TSarm*, updates its two tables by adding references to all these IP multicast streams. Then, the multicast proxy 44 returns to the initial state 200.

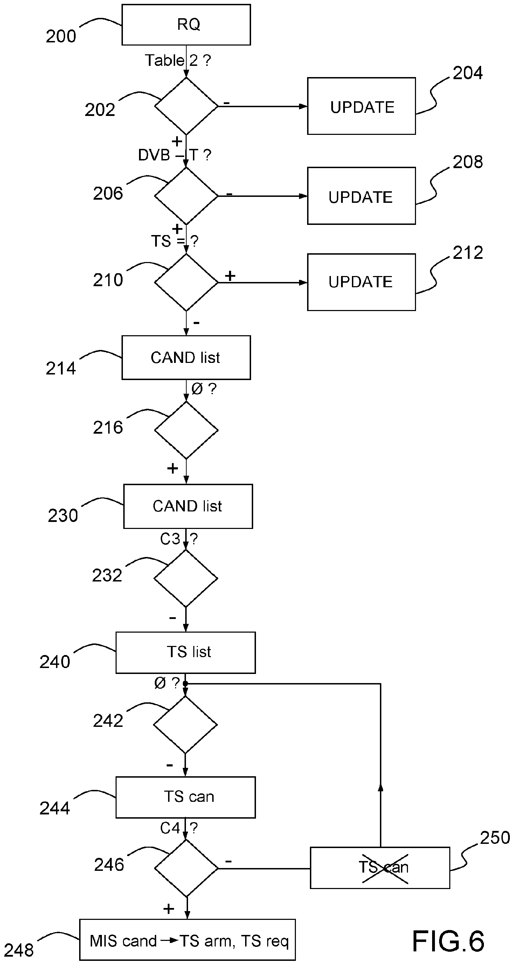

Figure 6 is a flowchart showing the steps of the reorganization of the transport streams, according to a fourth embodiment, when a request is emitted by the gateway 8 to receive an IP multicast stream available over the broadcast network 20 and there's no multicast stream present on the transport stream already received by the gateway, and different from the multicast streams already received, that could free enough bandwidth to deliver the requested IP multicast stream. Furthermore, in this embodiment, there's no combination of IP multicast streams of the requested transport stream that fulfils the condition C3.

Steps 200 to 232 are identical to those of the third embodiment (figure 5). Their description is not repeated.

In this fourth embodiment, the multicast proxy 44 check if there is a transport stream, different from TSreq and TSarm, that can free enough bandwidth to host the requested IP multicast stream MISreq and the list of already received IP multicast streams, if the reorganization ensures that more gateways will receive IP multicast streams over the broadcast network 20. For this, the multicast proxy 44 looks for a transport stream having a set of IP multicast streams that could free enough bandwidth to deliver the requested IP multicast stream MISreq and the list of already received IP multicast streams.

At step 240, the multicast proxy 44 generates a list with all the transport streams, except TSreq and TSarm.

At step 242, the multicast proxy 44 checks if said list is empty.

If the list is empty, then the multicast proxy does not change anything in the transport streams organization and returns to the initial state 200.

If the list is not empty, the multicast proxy 44 gets, at step 244, one transport stream, called TScan, from the list and checks, at step 246, if there is a combination of candidate IP multicast streams, i.e. one or more, among all the IP multicast streams present on TScan that could free enough bandwidth and that satisfies the following equation, called C4:

$$((\textstyle\sum_{k=0}^{N} \quad NarmTScan_k * BWarm_k) + (NreqTScan * BWreq) + (\sum_{k=0}^{M} \quad NcanTSarm_k * BWcan_k)$$
$$+ (\textstyle\sum_{k=0}^{P} \quad NcanTSreq_k * BWcan_k))$$

$$>$$

$$((\textstyle\sum_{k=0}^{N} \quad NarmTSarm_k * BWarm_k) + (NreqTSreq * BWreq) + (\sum_{k=0}^{M+P} \quad NcanTScan_k * BWcan_k))$$

in which:

- N is the number of already received IP multicast streams on TSarm ;
- M is the number of IP multicast streams present on TScan that could free enough bandwidth to deliver the list of already received IP multicast streams ;
- P is the number of IP multicast streams present on TScan that could free enough bandwidth to deliver the MISreq ;
- NarmTScan$_k$ is the number of gateways interested in the k$^{th}$ element of the list of already received IP multicast streams that are receiving at least one other IP multicast stream through TScan ;
- NcanTSarm$_k$ is the number of clients interested in the k$^{th}$ element of the combination of candidate IP multicast streams that are receiving at least one other IP multicast stream through TSarm ;
- NreqTScan is the number of clients interested in MISreq that are receiving at least one other IP multicast stream through TScan ;
- NarmTSarm$_k$ is the number of clients interested in the k$^{th}$ element of the list of already received IP multicast streams that are receiving at least one other IP multicast stream through TSarm ;
- NcanTScan$_k$ is the number of clients interested in the k$^{th}$ element of the combination of candidate IP multicast streams that are receiving at least one other IP multicast stream through TScan ;
- NreqTSreq is the number of clients interested in MISreq that are receiving at least one other IP multicast stream through TSreq ;
- $BWarm_k$ is the bandwidth of the $k^{th}$ element of the list of already received IP multicast streams ;
- $BWcan_k$ is the bandwidth of the $k^{th}$ element of the combination of candidate IP multicast streams ; and
- BWreq is the bandwidth of MISreq.

The multicast proxy 44 tests this equation C4 for every combination of IP multicast streams that could free enough bandwidth then it checks, at step 246, if at least one combination satisfies this equation C4.

If it is the case, then the multicast proxy 44 decides, at step 248, to move on TSarm and TSreq the combination that provides the highest value to:

$$((\textstyle\sum_{k=0}^{N} \quad NarmTScan_k * BWarm_k) + (NreqTScan * BWreq) + (\sum_{k=0}^{M} \quad NcanTSarm_k * BWcan_k)$$
$$+ (\textstyle\sum_{k=0}^{P} \quad NcanTSreq_k * BWcan_k))$$

$$-$$

$$((\textstyle\sum_{k=0}^{N} \quad NarmTSarm_k * BWarm_k) + (NreqTSreq * BWreq) + (\sum_{k=0}^{M+P} \quad NcanTScan_k * BWcan_k))$$

The multicast proxy 44 prevents all the gateways impacted by this decision, allocates MISreq and all already received IP multicast streams on TScan and MIScandidate to TSreq and TSarm. Then, it updates its two tables by managing the references to all these IP multicast streams. Then, the multicast proxy 44 returns in the initial state 200.

If no combination fills the condition C4, then the multicast proxy 44 removes, at step 250, the transport stream TScan from the list of transport streams and goes to step 242.

Figure 7 illustrates the steps carried, along the time axis t, by the gateway 8 when it is concerned by a reorganization of the IP multicast streams on the transport streams.

The gateway 8 can receive only one transport stream simultaneously. Consequently, when the multicast proxy 44 allocates an IP multicast stream from a transport stream TS1 to another transport stream TS2 on the same broadcast network 20, the gateway 8 may suffer a stream discontinuity, i.e. not all IP multicast packets are received, during the switching. To avoid this main problem, the gateway 8 uses a temporary stream on another network, for example the broadcast network 22 or the broadband network 24, in order to receive the IP multicast stream in a continuous way.

The temporary multicast stream delivered over broadband has preferably a little advance over the same multicast stream delivered over transport stream TS 1. Else a discontinuity is inevitable.

At step 300, a first module 70 of the gateway 8, represented in figure 9, receives a message indicating that an IP multicast stream will be moved from TS1 to TS2. Then, a second module 80 of the gateway 8, represented in figure 9, requests, at step 302, to receive this IP multicast transport stream on the broadband network 24 while continuing to receive it on its broadcast interface 10. When the gateway 8 starts receiving the IP multicast stream over the broadband network 24, the same IP multicast packets are received twice, with a delay because both networks 20, 24 are not synchronized together. Receiving twice the same packets is not a problem for a gateway because it will discard the second one.

After a while, sufficient to ensure that all clients are receiving twice the IP multicast stream, the multicast proxy 44 operates, at step 304, the switch so that the IP multicast stream is no longer available on the old transport stream TS1 but on the new transport stream TS2. Then, the gateway 6 operates the switch, which takes a delay 306. During this delay 306, the gateway 6 receives the IP multicast stream only through the broadband network 24.

After the delay 306, corresponding to the switch duration, the gateway 6 receives also the IP multicast stream over the new transport stream TS2. This means that the multicast packets of the IP multicast stream are received twice. Then, at step 308, the gateway 6 stops receiving the IP multicast stream over the broadband network 24 and receives it only over TS2.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed and/or claimed may be combined without departing from the scope of the invention.

Thus, even if the above description focused on re-organizing IP multicast streams inside a single broadcast network (DVB-T network 20), the invention also includes a re-organization of the IP multicast streams over a plurality of broadcast networks. Thus, an IP multicast stream may be moved from one broadcast network to another one, if this movement satisfies the majority of the gateways.

Moreover, the above described re-organization is based on information provided by the gateways about the IP multicast streams they receive and/or request. Thus, the multicast proxy does not know what are the broadcast streams each gateway is receiving. With this additional information, the multicast proxy could also improve the decision of re-organization. This last can concern either only the IP multicast streams or both broadcast and IP multicast streams. Moving a broadcast stream from a transport stream to another may be achieved in a seamless way providing that the broadcast adapter of the gateway stops receiving the broadcast stream, tunes on the new transport stream and starts receiving the broadcast stream again. This implies that the broadcast adapter be provided with all the parameters relative to the transport streams, the PIDs, etc.

**Claims**

1. Method for managing the transmission of data streams from a content server (4) to a plurality of receivers (8), the transmission of the data streams being possible over at least one broadcast network (20) made up of several transport streams (TS1, TS2, TS3) and over a broadband network (24), said method comprising a step of reorganization of the data streams on the transport streams (TS1, TS2, TS3) to ensure that more receivers receive the data streams over the broadcast network (20) after said reorganization.

2. Method of claim 1, wherein the step of reorganization comprises a reallocation of at least one data stream to a transport stream in function of the number of receivers interested in receiving said data stream and/or on the data stream's bandwidth.

3. Method of claim 1 or 2, wherein when a first data stream is delivered only over the broadband network (24), the step of reorganization comprises steps of:

   - identification of a second data stream delivered over the broadcast network on a second transport stream ;
   - allocation (102) of the second data stream to the broadband network (24);
   - computation (104), for each transport stream of the broadcast network (20), of the number of receivers requesting the first data stream and already receiving at least one other data stream over said transport stream ; and
   - selection (110) of a third transport stream as the transport stream associated with the highest number of receivers ;
   - comparison (112) between the third transport stream and the second transport stream ;
   - if the third transport stream is equal to the second transport stream, allocation (108) of the first data stream to the second transport stream instead of the second data stream ;
   - if the third transport stream is different from the second transport stream :
   - selection (118) of a third data stream, delivered on said third transport stream, having the less receivers requesting it;
   - verification (120) of a first condition, relative to the third data stream ensuring that more receivers receive data streams over the broadcast network (20) after said reorganization ; and
   - if the first condition (C1) is satisfied, allocation (124) of the third data stream to the second transport stream instead of the second data stream and allocation of the first data stream to the third transport stream instead of the third data stream.

4. Method of claim 1 or 2, wherein when a first data stream, that is requested by a receiver (8), is delivered over the broadcast network (20) on a first transport stream, the step of reorganization comprises steps of:

- identification of a second transport stream already received by the receiver making the request ;
- identification (218) of a second data stream, delivered on the second transport stream, having enough bandwidth to deliver the first data stream;
- verification (220) of a second condition, relative to the second data stream, ensuring that more receivers receive data streams over the broadcast network after said reorganization ; and
- if the second condition is satisfied, allocation (224) of the second data stream to the first transport stream and allocation (224) of the first data stream to the second transport stream instead of the second data stream.

5. Method of claim 1 or 2, wherein when a first data stream, that is requested by a receiver (8), is delivered over the broadcast network (20) on a first transport stream, the step of reorganization comprises steps of:

- identification of a second transport stream already received by the receiver making the request ;
- identification of a set of data streams (230), different from the first data stream, delivered over the first transport stream, said set having enough bandwidth to deliver data streams already received on the second transport stream;
- verification (232) of a third condition, relative to the identified set, ensuring that more receivers receive data streams over the broadcast network (20) after said reorganization ; and
- if the third condition is satisfied, allocation (234) of the set to the second transport stream and allocation (234) of the already received data streams to the first transport stream instead of said set.

6. Method of claim 1 or 2, wherein when a first data stream, that is requested by a receiver (8), is delivered over the broadcast network (20) on a first transport stream, the step of reorganization comprises steps of:

- identification of a second transport stream already received by the receiver (8) making the request ;
- identification of a third transport stream different from the first transport stream and from the second transport stream ;
- identification of a set of data streams (244) delivered over the third transport stream, said set having enough bandwidth to deliver together data streams already received on the second transport stream and the first data stream ;
- verification (246) of a fourth condition, relative to the identified set, ensuring that more receivers receive data streams over the broadcast network (20) after said reorganization ; and
- if the fourth condition is satisfied, allocation (248) of the set to the first and to the second transport streams and allocation (248) of the already received data streams and of the first data stream to the third transport stream instead of said set.

7. Method of any of claims 1 to 6, further comprising a step, carried when a receiver is impacted by the reorganization of the data streams of transmission (124; 224; 234; 248) to the receiver of a message indicating that a data stream being received by said receiver will be moved from a first to a second transport stream over a first network.

8. Method of any of claims 1 to 7, wherein the data streams comprise broadcast and/or multicast streams.

9. Equipment (44) for managing the transmission of data streams from a content server (4) to a plurality of receivers (8), the transmission of each data stream to each receiver being possible over at least one broadcast network (20) made up of several transport streams (TS1, TS2, TS3) and over a broadband network (24), said equipment (44) comprising a reorganizer (60) for reorganizing the data streams on the transport streams (TS1, TS2, TS3) to ensure that more receivers receive data streams over the broadcast network (20) after said reorganization.

10. Equipment (44) according to claim 9, wherein the reorganizer (60) comprises a reallocation module (62) for reallocating at least one data stream to a transport stream in function of the number of receivers interested in receiving said data stream and/or on the data stream's bandwidth.

11. Receiver (8) able to receive data streams from a content server (4) over at least a broadcast network (20) and a broadband network (24), said receiver (8) further comprising:

- a first module (70) for receiving from an equipment (44) a message indicating that a data stream being received by said receiver (8) will be moved from a first (TS 1) to a second (TS2) transport stream over a first network (20); and
- a second module (80) for transmitting a request to receive said data stream over a second network.

**12.** A computer-readable program comprising computer-executable instructions to enable a computer to perform the method of any one of claims 1 to 8.

FIG.1

| TS 1 | BS11 | BS12 | BS13 | MS1 | MS4 | |
| TS 2 | BS21 | BS22 | MS3 | MS8 | MS9 | MS11 |
| TS 3 | BS31 | BS32 | BS33 | MS6 | MS7 | |

FIG.2

FIG.3

FIG.4

FIG.5

FIG.6

FIG.7

FIG.8

FIG.9

Europäisches
Patentamt

European
Patent Office

Office européen
des brevets

**EUROPEAN SEARCH REPORT**

Application Number

EP 12 30 5252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNGE QI ET AL: "Dynamic broadcast", ELECTRONIC MEDIA TECHNOLOGY (CEMT), 2011 14TH ITG CONFERENCE ON, IEEE, 23 March 2011 (2011-03-23), pages 1-6, XP031953974, ISBN: 978-1-4577-1269-2 | 1-10,12 | INV. H04L12/18 ADD. H04L12/28 |
| Y | * page 1, paragraph Abstract - page 3, paragraph G. Terminal; figure 1 * * page 6, paragraph IV. TERMINAL ASPECT - paragraph V. CONCLUSION; figure 5 * | 11 | |
| X | US 2009/185522 A1 (PERIYALWAR SHALINI [CA] ET AL) 23 July 2009 (2009-07-23) | 11 | |
| Y A | * page 1, paragraph 7 - page 6, paragraph 64; figure 2 * | 11 1-10,12 | |
| A | EP 2 164 225 A1 (NOKIA SIEMENS NETWORKS OY [FI]) 17 March 2010 (2010-03-17) * page 4, paragraph 45 - page 7, paragraph 90; figures 1-2 * | 1-12 | |
| A | US 2002/184642 A1 (LUDE PETER J [US] ET AL) 5 December 2002 (2002-12-05) * page 2, paragraph 14 - paragraph 20 * | 1-12 | TECHNICAL FIELDS SEARCHED (IPC) H04L |

The present search report has been drawn up for all claims

| Place of search | Date of completion of the search | Examiner |
|---|---|---|
| Munich | 14 June 2012 | Fischer, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 634 961 A1**

## ANNEX TO THE EUROPEAN SEARCH REPORT
## ON EUROPEAN PATENT APPLICATION NO.

EP 12 30 5252

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2012

| Patent document cited in search report | Publication date | Patent family member(s) | Publication date |
|---|---|---|---|
| US 2009185522 A1 | 23-07-2009 | US 2009185522 A1<br>WO 2006072825 A1 | 23-07-2009<br>13-07-2006 |
| EP 2164225 A1 | 17-03-2010 | NONE | |
| US 2002184642 A1 | 05-12-2002 | US 2002184642 A1<br>WO 02087253 A2 | 05-12-2002<br>31-10-2002 |

EPO FORM P0459

For more details about this annex : see Official Journal of the European Patent Office, No. 12/82

24

**EP 2 634 961 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1298836 A